# FASCICULE DE BREVET EUROPEEN

(11) **EP 4 101 688 B1**
(45) Date de publication et mention de la délivrance du brevet: **18.10.2023**
(21) Numéro de dépôt: 22177778.2
(22) Date de dépôt: 08.06.2022
(51) Int. Cl.: B60N 2/04, B60N 2/24, B61D 33/00

(54) **VÉHICULE DE TRANSPORT DE PASSAGERS AVEC NOMBRE DE PLACES ASSISES VARIABLE, ET PROCÉDÉ DE GESTION DE L'ESPACE DISPONIBLE À L'INTÉRIEUR DU VÉHICULE**
FAHRZEUG ZUR PERSONENBEFÖRDERUNG MIT VARIABLER ANZAHL VON SITZPLÄTZEN UND VERFAHREN ZUR HANDHABUNG DES VERFÜGBAREN RAUMS IM INNEREN DES FAHRZEUGS
PASSENGER TRANSPORT VEHICLE WITH VARIABLE NUMBER OF SEATS, AND METHOD FOR MANAGING THE SPACE AVAILABLE INSIDE THE VEHICLE

(30) Priorité: 09.06.2021 FR 2106068
(43) Date de publication de la demande: 14.12.2022
(73) Titulaire: ALSTOM Holdings, 93400 Saint-Ouen-sur-Seine (FR)
(72) Inventeur: KONIECZKA, Jérôme, 62000 DAINVILLE (FR)
(74) Mandataire: Lavoix

(56) Documents cités:
- WO-A1-02/06117
- CN-A- 110 356 296
- CN-A- 112 824 205
- GB-A- 2 465 212

## Description

La présente invention concerne en général un véhicule de transport de passagers, et en particulier un véhicule de transport de passagers équipé avec un système de gestion de l'espace à l'intérieur du véhicule qui permet d'adapter l'espace disponible entre les passagers assis et les passagers debout en fonction des conditions effectives de service, et spécialement de la densité ou de la quantité des passagers transportés pendant les différents moments du service. Le document CN1 10356296 décrit un véhicule de transport de passagers comportant un système de gestion de l'espace à l'intérieur du véhicule.

La présente invention concerne également un procédé de gestion de l'espace disponible à l'intérieur d'un véhicule de transport de passagers.

Il est bien connu que les moyens de transport de passagers, comme par exemple les trains, les métropolitains et les bus, sont de plus en plus utilisés dans le monde entier.

En conséquence, en particulier dans certaines zones, comme par exemple dans les grands centres urbains, les véhicules ou les convois utilisés sont très congestionnés pour au moins une certaine partie de leur service, et spécialement pendant les heures de pointe.

Puisque les véhicules aujourd'hui utilisés ont une capacité prédéterminée et une configuration de leur espace intérieur généralement prédéfinie, le résultat est que le confort à bord du véhicule n'est pas optimal, ni pendant les heures de pointe, ni pendant les heures creuses.

En effet, le nombre de places assises disponibles et leur positionnement est généralement prédéfini et pendant les heures de pointe la plupart des passagers doit donc rester debout ; par contre, pendant les heures creuses, il est également possible que des passagers restent debout, même s'il y a beaucoup d'espace disponible à l'intérieur du véhicule.

Par conséquent, un but principal de la présente invention est de fournir une solution offrant des améliorations par rapport à l'état de l'art connu, et spécialement de réaliser des véhicules de transport de passagers où l'exploitation de l'espace à l'intérieur du véhicule peut être optimisé en fonction des conditions d'utilisation différentes pendant l'horaire de service, en particulier en fonction du trafic passagers.

Ce but est atteint par un véhicule de transport de passagers, comportant un système de gestion de l'espace à l'intérieur du véhicule qui est configuré pour faire varier le nombre de places assises disponibles en fonction du niveau de trafic de passagers à transporter, dans lequel le système de gestion comporte une structure de support qui est installée de manière fixe à l'intérieur du véhicule, et au moins une surface déplaçable qui est reliée à la structure de support de manière mobile entre une première position où la surface déplaçable forme au moins une place assise disponible pour les passagers et une deuxième position où la surface déplaçable est déplacée en position inaccessible aux passagers, caractérisé en ce que la structure de support comporte au moins un poteau qui est installé en position essentiellement verticale à l'intérieur du véhicule, et l'au moins une surface déplaçable est reliée coulissante au poteau de la structure de support entre la première position où la surface déplaçable est positionnée à proximité vers et à une distance prédéterminée du sol du véhicule et la deuxième position où la surface déplaçable est positionnée à proximité du ou contre le plafond du véhicule.

Selon des aspects avantageux mais non obligatoires de l'invention, un tel véhicule de transport de passagers peut incorporer une ou plusieurs des caractéristiques suivantes, prises selon toute combinaison techniquement admissible :
- le système de gestion comporte au moins un dispositif de commande installé à bord du véhicule et configuré pour fournir au moins un signal de commande à distance pour activer, de préférence en temps réel, la variation du nombre de places assises disponibles pour les passagers ;
- le système de gestion comporte des moyens d'actionnement qui sont configurés pour déplacer l'au moins une surface déplaçable entre la première position et la deuxième position en fonction d'un signal de command émis à distance par le dispositif de commande ;
- les moyens d'actionnement comportent au moins un moteur command é à distance ;
- les moyens d'actionnement comportent un moteur linéaire monté coulissant sur l'au moins un poteau de la structure de support, en étant essentiellement solidaire avec l'au moins une surface déplaçable ;
- la structure de support comporte au moins deux poteaux qui sont installés en position essentiellement verticale à l'intérieur du véhicule à distance l'un de l'autre ;
- l'au moins une surface déplaçable comporte une seule surface déplaçable qui forme une pluralité de places assises côté à côté et est reliée à ses extrémités aux deux poteaux de façon coulissante, et les moyens d'actionnement comportent un seul moteur linéaire monté sur un des deux poteaux, ou deux moteurs montés chacun sur un poteau correspondant ;
- l'au moins une surface déplaçable comporte au moins deux surfaces déplaçables séparées qui sont chacune reliées, de façon coulissante, à un poteau correspondant, chaque surface déplaçable formant au moins une place assise, et dans lequel les moyens d'actionnement comportent, pour chaque surface déplaçable, un moteur linéaire monté coulissant sur le poteau correspondant.

Ce but est atteint également par un procédé de gestion de l'espace à l'intérieur d'un véhicule selon les revendications 1 à 7, comprenant au moins une étape consistant à modifier le nombre de place assises disponibles en fonction du niveau de trafic de passagers à transporter.

D'autres aspects et avantages de l'invention apparaîtront à la lecture de la description qui suit, donnée uniquement à titre d'exemple et faite en référence aux dessins annexés, parmi lesquels :
[FIG. 1] la Figure 1 est une vue illustrant schématiquement l'intérieur d'un véhicule de transport de passagers dans une première configuration qui peut être utilisée pendant une condition de trafic de passagers fluide ;
[FIG. 2] la Figure 2 est une vue illustrant schématiquement l'intérieur d'un véhicule de transport de passagers dans une deuxième configuration qui peut être utilisée pendant une condition de trafic de passagers plus dense ;
[FIG. 3] la Figure 3 est une vue représentant schématiquement des composants d'un système de gestion de l'espace à l'intérieur d'un véhicule selon l'invention, selon un premier exemple de réalisation ;
[FIG. 4] la Figure 4 est une vue représentant schématiquement des composants d'un système de gestion de l'espace à l'intérieur du véhicule selon l'invention, selon un deuxième exemple de réalisation.

Il est à noter que dans la description détaillée qui suit, les composants identiques ou similaires, du point de vue structurel et/ou fonctionnel, portent les mêmes références numériques, qu'ils soient représentés ou non dans des modes de réalisation différents de la présente description.

Il convient également de noter que, pour décrire de manière claire et concise la présente invention, les dessins ne sont pas nécessairement à l'échelle et que certaines caractéristiques peuvent être présentées sous une forme schématique.

En outre, lorsque le terme "adapté" ou "agencé" ou "configuré" est utilisé ici en se référant à tout composant dans son ensemble, ou à toute partie d'un composant, ou à une combinaison de composants, il doit être compris que cela signifie et englobe la structure et/ou la configuration et/ou la forme et/ou le positionnement du composant ou de la partie que ce terme désigne.

En particulier, par rapport à des moyens/modules électroniques et/ou logiciels, chacun des termes indiqués ci-dessus englobe les circuits électroniques, ainsi que des codes logiciels et/ou des algorithmes ou des programmes complets stockés ou en cours d'exécution.

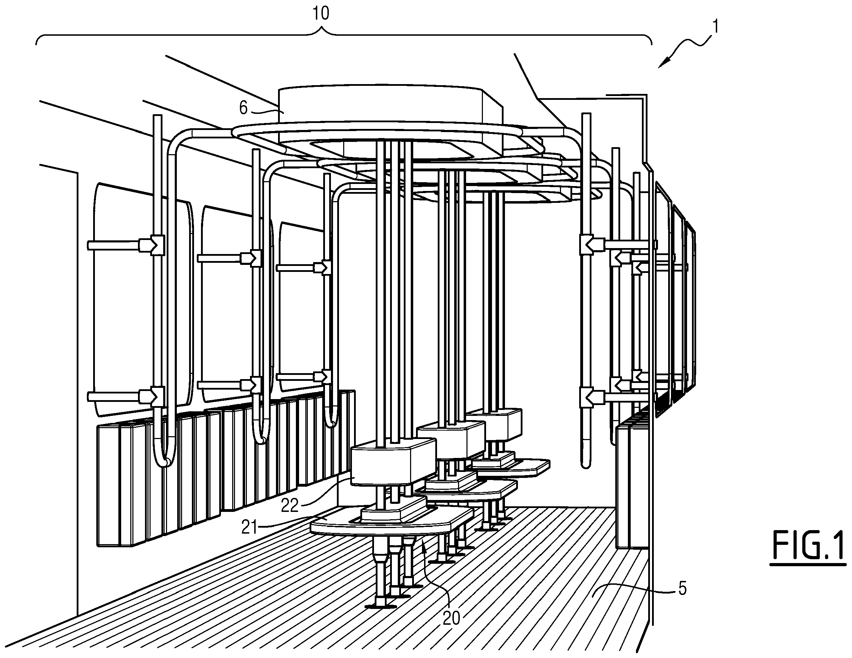

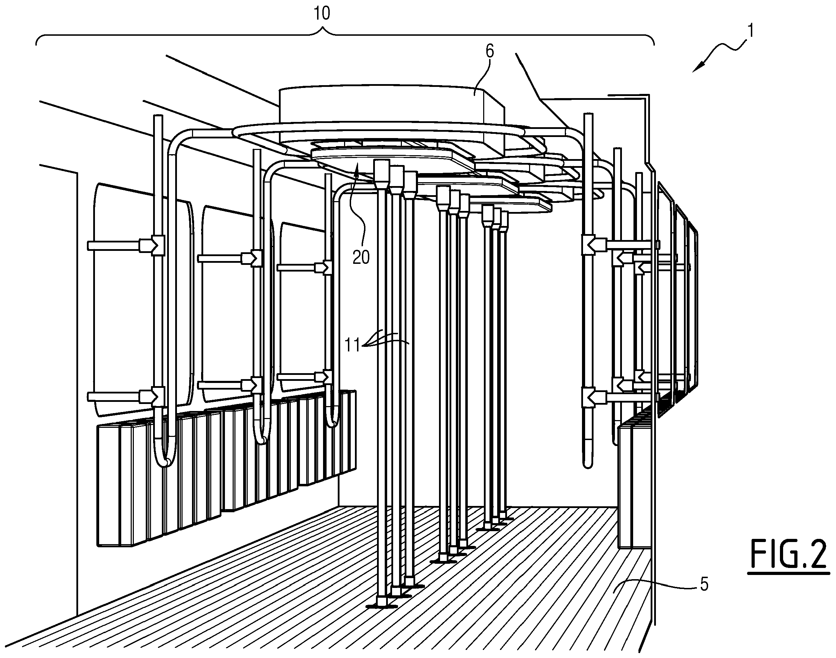

Les figures 1 et 2 illustrent schématiquement l'intérieur d'un véhicule de transport de passagers selon la présente invention, désigné avec le numéro de référence 1.

Dans l'exemple illustré sur les figures 1 et 2, le véhicule 1 est un train d'une ligne métropolitaine ; toutefois, la définition de « véhicule de transport de passagers » utilisée ici doit être interprétée dans le sens le plus large possible, c'est-à-dire comme incluant tout type de véhicule de transport de passagers, et cette définition peut être considérée donc comme couvrant également des autres véhicules, par exemple les trams, les trains de surface, les autobus, et similaires.

Le véhicule 1 selon la présente invention comporte un système de gestion de l'espace à l'intérieur du véhicule 1, qui est configuré pour modifier la configuration de cet espace destiné à accueillir les passagers, et en particulier pour modifier le nombre des places assises disponibles en fonction de la densité effective des passagers à transporter, c'est à dire du niveau de trafic de passagers à transporter.

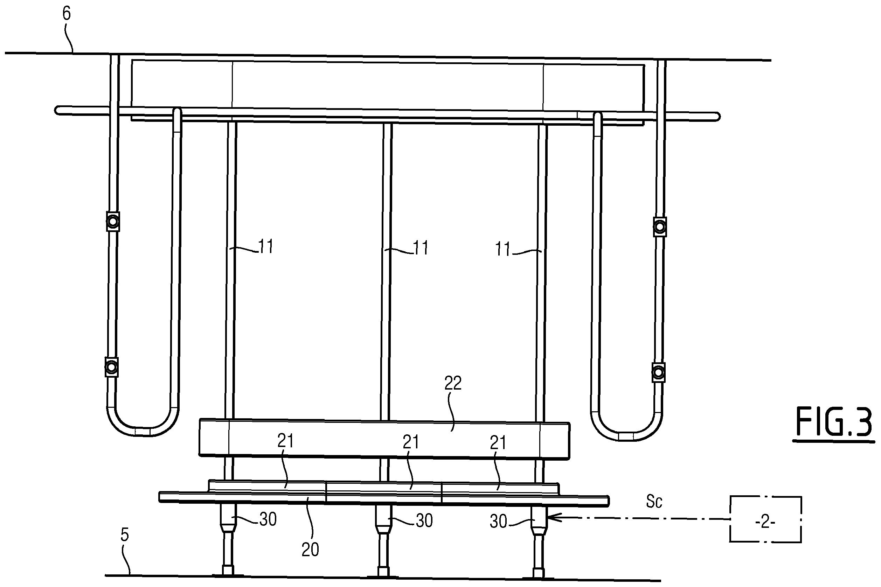

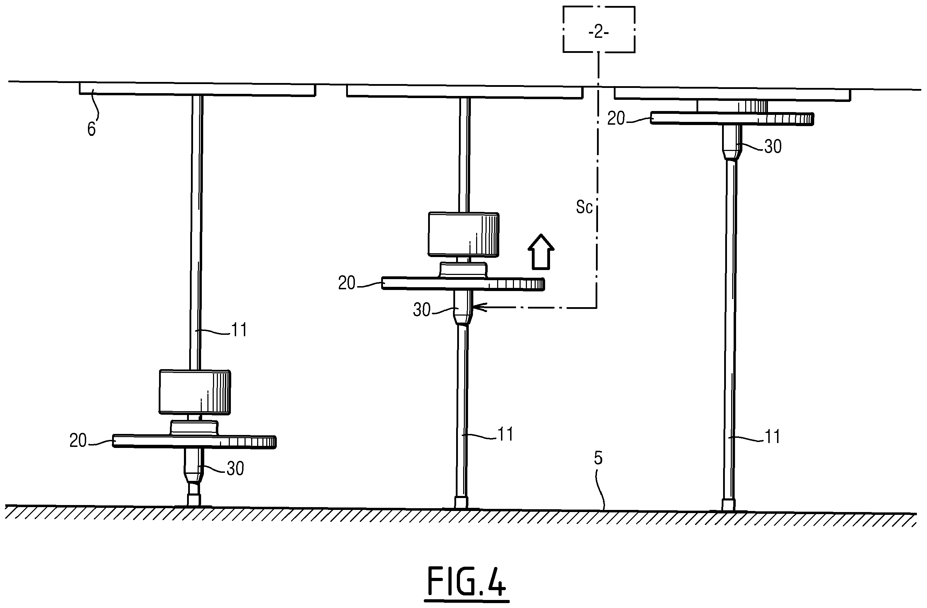

Selon une possible forme de réalisation, le système de gestion comporte au moins un dispositif de commande 2, représenté schématiquement sur les figures 3 et 4 sous forme d'une boîte en ligne pointillée, qui est configuré pour générer au moins un signal de commande S_{c} adapté à activer la modification du nombre de places assises disponibles pour les passagers.

De préférence, le dispositif de commande 2 est configuré pour générer le signal de commande S_{c} à distance par rapport à la position des places assises à modifier, c'est-à-dire loin des places assises, et en particulier où les passagers ne peuvent pas l'activer.

De préférence, le dispositif de commande 2 est installé à bord du véhicule 1, par exemple dans le poste ou la cabine de pilotage du véhicule 1, ou dans toute position inaccessible aux passagers, et est configuré pour activer la modification du nombre des places assises disponibles pour les passagers, de préférence en temps réel pendant le voyage du véhicule 1, en particulier selon les conditions effectives du trafic de passagers.

Par exemple, un opérateur à bord du véhicule 1 peut activer la modification du nombre des places assises disponibles pour les passagers sur la base de sa vue directe ou en fonction d'images capturées par des caméras vidéo ; ces caméras vidéo peuvent être montées par exemple dans l'espace destiné à accueillir les passagers et/ou sur les quais des gares, et peuvent surveiller la densité effective des passagers à transporter.

Selon une forme possible de réalisation, le système de gestion comporte en outre une structure de support, indiquée globalement avec le nombre de référence 10 sur les figures 1 et 2, qui est installée de manière fixe à l'intérieur du véhicule 1, et au moins une surface déplaçable 20 qui est reliée à la structure de support 10 de manière mobile entre une première position où la surface déplaçable 20 forme au moins une place assise 21 disponible pour les passagers, comme illustré sur la figure 1, et une deuxième position où la surface déplaçable 20 est déplacée en position inaccessible pour les passagers, comme illustré sur la figure 2.

En outre, le système de gestion utilisé dans le véhicule 1 selon l'invention comporte des moyens d'actionnement 30 qui sont configurés pour déplacer l'au moins une surface déplaçable 20 entre la première position et la deuxième position en fonction d'un signal de command S_{c} reçu et qui a été émis à distance par le dispositif de commande 2.

En particulier, les moyens d'actionnement 30 comportent au moins un moteur 30 commandé à distance par le dispositif de commande 2.

Selon une forme possible de réalisation, la structure de support 10 comporte au moins un poteau 11 qui est installé à l'intérieure du véhicule 1, de préférence en position essentiellement verticale, et l'au moins une surface déplaçable 20 est reliée coulissante au poteau 11 de la structure de support 10 entre la première position où la surface déplaçable 20 est positionnée à proximité du sol 5 du véhicule 1, par exemple à une distance prédéterminée, comme illustré sur la figure 1, et la deuxième position où la surface déplaçable 20 est positionnée à proximité du plafond 6 ou directement contre le plafond 6 du véhicule 1, comme illustré sur la figure 2.

Selon cette forme de réalisation, l'au moins un moteur 30 commandé à distance est un moteur linéaire monté sur l'au moins un poteau 11 de la structure de support 10 et qui coulisse, le long du poteau 11, de façon essentiellement solidaire avec l'au moins une surface déplaçable 20.

En particulier, selon un exemple possible de réalisation illustré sur la figure 3, la structure de support 10 comporte au moins deux poteaux 11 qui sont installés dans le véhicule 1 à distance l'un de l'autre, par exemple en position essentiellement verticale ; selon cet exemple possible de réalisation, l'au moins une surface déplaçable 20 comporte une seule surface déplaçable 20 qui est positionnée transversalement par rapport aux deux poteaux 11 et est reliée à ses extrémités aux mêmes poteaux 11.

Dans ce cas, la surface déplaçable 20 a donc la forme d'une banquette coulissante qui comprend une pluralité de places assises ou sièges 21, placés côté à côté.

Conformément à cet exemple possible de réalisation, les moyens d'actionnement 30 comportent un seul moteur linéaire monté sur un des deux poteaux 11, ou alternativement, deux moteurs montés chacun sur un poteau 11 correspondant ; chaque moteur 30 coulisse le long du poteau 11 où il est monté, avec le poteau qui forme en pratique un rail de glissement.

Selon une autre forme possible de réalisation, l'au moins une surface déplaçable 20 comporte au moins deux surfaces déplaçables séparées qui sont reliées, de façon coulissante, chacune à un poteau 11 correspondant.

Dans l'exemple illustré sur la figure 4, il y a trois surfaces déplaçables 20 chacune reliée, de façon coulissante, à un poteau 11 correspondant.

Dans cette forme possible de réalisation, chaque surface déplaçable 20 forme une place assise 21 ou plusieurs places assises 21, et les moyens d'actionnement 30 comportent, pour chaque surface déplaçable 20, un moteur linéaire ; chaque moteur 30 est monté coulissant sur le poteau 11 de la structure de support auquel la surface déplaçable spécifique 20 est reliée.

Comme évident pour l'homme du métier, la présente invention peut être implémentée aisément sous forme d'un procédé de gestion de l'espace à l'intérieur d'un véhicule 1, comprenant au moins une étape consistant à modifier le nombre de place assises disponibles en fonction du niveau de trafic de passagers à transporter.

Cette étape comporte une ou plusieurs sous-étapes dans lesquelles les composants du système sont utilisés selon les modalités précédemment décrites.

Par exemple, ladite étape comprend une première sous-étape d'actionnement du dispositif de commande 2 par un opérateur, notamment par le conducteur du véhicule, et une deuxième sous-étape de déplacement d'au moins une surface déplaçable entre la première position et la deuxième position par coulissement le long du poteau 11.

Il ressort clairement de la description qui précède que le véhicule 1 de transport de passagers et le procédé de gestion de l'espace à l'intérieur du véhicule 1 permettent d'atteindre le but à la base de la présente invention car l'espace disponible à l'intérieur du véhicule peut être géré plus efficacement par rapport aux solutions connues ; en effet, dans le véhicule 1 selon l'invention, l'espace à l'intérieur du véhicule est exploité de façon optimisé soit pendant les heure creuses soit pendant les heures de pointe du service. En particulier, la configuration interne du véhicule peut être adaptée au trafic en temps réel ; lorsque le trafic de passagers est fluide, le nombre de places assises disponibles est augmenté ; au contraire, lorsque le trafic est plus dense, ces places assises, individuelles ou regroupées par exemple sous forme de banquettes, sont déplacées en libérant tout l'espace d'encombrement de sorte à permettre au plus grand nombre de passagers de disposer d'espace debout. Dans cette configuration, le gain de capacité est optimal.

Ces résultats sont obtenus avec une solution relativement simple du point de vue constructif et très flexible à appliquer.

Le véhicule 1 et procédé ainsi conçus sont susceptibles de modifications et de variations. Par exemple, les surfaces déplaçables peuvent comprendre également des parties formant des dossiers, indiqués sur les figures avec le nombre de référence 22, pour les places assises déplaçables 21 ; alternativement, les dossiers 22 peuvent être formés par des surfaces séparées et montées en position non déplaçable. Il est possible de réaliser une combinaison avec des sièges ou places assises en forme de banquettes ou similaires, comme illustré sur la figure 3, et avec des places assises ou sièges individuels comme illustré sur la figure 4. En outre, les places assises 21 déplaçables peuvent être positionnées le long du couloir central du véhicule 1 et/ou le long des côtés ; le dispositif de commande 2 peut être configuré pour déplacer sélectivement un certain nombre de places assises déplaçables et pas toutes en même temps

L'invention est définie par les revendications.

## Revendications

1. Véhicule (1) de transport de passagers, comportant un système de gestion de l'espace à l'intérieur du véhicule qui est configuré pour faire varier le nombre de places assises disponibles en fonction du niveau de trafic de passagers à transporter, dans lequel le système de gestion comporte une structure de support (10) qui est installée de manière fixe à l'intérieur du véhicule (1), et au moins une surface déplaçable (20) qui est reliée à la structure de support (10) de manière mobile entre une première position où la surface déplaçable (20) forme au moins une place assise (21) disponible pour les passagers et une deuxième position où la surface déplaçable (20) est déplacée en position inaccessible aux passagers, **caractérisé en ce que** la structure de support (10) comporte au moins un poteau (11) qui est installé en position essentiellement verticale à l'intérieur du véhicule (1), et l'au moins une surface déplaçable (20) est reliée coulissante au poteau (11) de la structure de support (10) entre la première position où la surface déplaçable (20) est positionnée à proximité vers et à une distance prédéterminée du sol (5) du véhicule (1) et la deuxième position où la surface déplaçable (20) est positionnée à proximité du ou contre le plafond du véhicule (1).

2. Véhicule (1) selon la revendication 1, dans lequel le système de gestion comporte au moins un dispositif de commande (2) installé à bord du véhicule (1) et configuré pour fournir au moins un signal de commande (S_{c}) à distance pour activer, de préférence en temps réel, la variation du nombre de places assises disponibles pour les passagers.

3. Véhicule (1) selon la revendication 2, dans lequel le système de gestion comporte des moyens d'actionnement (30) qui sont configurés pour déplacer l'au moins une surface déplaçable (20) entre la première position et la deuxième position en fonction d'un signal de command (S_{c}) émis à distance par le dispositif de commande (2).

4. Véhicule (1) selon la revendication 3, dans lequel les moyens d'actionnement (30) comportent un moteur linéaire monté coulissant sur l'au moins un poteau (11) de la structure de support (10), en étant essentiellement solidaire avec l'au moins une surface déplaçable (20).

5. Véhicule (1) selon la revendication 4, dans lequel la structure de support (10) comporte au moins deux poteaux (11) qui sont installés en position essentiellement verticale à l'intérieur du véhicule (1) à distance l'un de l'autre.

6. Véhicule (1) selon la revendication 5 prise en combinaison avec la revendication 3, dans lequel l'au moins une surface déplaçable (20) comporte une seule surface déplaçable qui forme une pluralité de places assises (21) côté à côté et est reliée à ses extrémités aux deux poteaux (11) de façon coulissante, et dans lequel les moyens d'actionnement (30) comportent un seul moteur linéaire monté sur un des deux poteaux (11), ou deux moteurs montés chacun sur un poteau (11) correspondant.

7. Véhicule (1) selon la revendication 5 prise en combinaison avec la revendication 3, dans lequel l'au moins une surface déplaçable (20) comporte au moins deux surfaces déplaçables séparées qui sont reliées, de façon coulissante, chacune à un poteau (11) correspondant, chaque surface déplaçable formant au moins une place assise (21), et dans lequel les moyens d'actionnement (30) comportent, pour chaque surface déplaçable (20), un moteur linéaire monté coulissant sur le poteau (11) correspondant.

8. Procédé de gestion de l'espace à l'intérieur d'un véhicule (1) selon l'une quelconque des revendications précédentes, comprenant au moins une étape consistant à modifier le nombre de places assises disponibles en fonction du niveau de trafic de passagers à transporter.

## Patentansprüche

1. Fahrzeug (1) zur Beförderung von Passagieren, umfassend ein Raummanagementsystem im Inneren des Fahrzeugs, das konfiguriert ist, um die Anzahl der verfügbaren Sitzplätze abhängig von dem Aufkommen der zu befördernden Passagiere zu variieren, das Managementsystem umfassend eine Trägerstruktur (10), die fest im Inneren des Fahrzeugs (1) installiert ist, und mindestens eine verstellbare Fläche (20) umfasst, die zwischen einer ersten Position, in der die verstellbare Fläche (20) mindestens einen für die Passagiere verfügbaren Sitzplatz (21) bildet, und einer zweiten Position, in der die verstellbare Fläche (20) in eine für die Passagiere unzugängliche Position verstellt wird, beweglich mit der Trägerstruktur (10) verbunden ist, **dadurch gekennzeichnet, dass** die Trägerstruktur (10) mindestens einen Pfosten (11) umfasst, der in einer im Wesentlichen vertikalen Position im Inneren des Fahrzeugs (1) installiert ist, und die mindestens eine verstellbare Fläche (20) zwischen der ersten Position, in der die verstellbare Fläche (20) nahe an und in einem vorbestimmten Abstand von dem Boden (5) des Fahrzeugs (1) positioniert ist, und der zweiten Position, in der die verstellbare Fläche (20) nahe an oder gegen die Decke des Fahrzeugs (1) positioniert ist, verstellbar mit dem Pfosten (11) der Trägerstruktur (10) verbunden ist.

2. Fahrzeug (1) nach Anspruch 1, wobei das Managementsystem mindestens eine Steuervorrichtung (2) umfasst, die an Bord des Fahrzeugs (1) installiert und konfiguriert ist, um mindestens ein Fernsteuersignal (S_{c}) bereitzustellen, um die Variation der Anzahl der für die Passagiere verfügbaren Sitzplätze vorzugsweise in Echtzeit zu aktivieren.

3. Fahrzeug (1) nach Anspruch 2, wobei das Managementsystem Betätigungseinrichtungen (30) umfasst, die konfiguriert sind, um die mindestens eine verstellbare Fläche (20) abhängig von einem Steuersignal (S_{c}), das von der Steuervorrichtung (2) ferngesteuert ausgegeben wird, zwischen der ersten Position und der zweiten Position zu verstellen.

4. Fahrzeug (1) nach Anspruch 3, wobei die Betätigungseinrichtungen (30) einen Linearmotor umfassen, der gleitend an dem mindestens einen Pfosten (11) der Trägerstruktur (10) montiert ist, wobei er im Wesentlichen fest mit der mindestens einen verstellbaren Fläche (20) verbunden ist.

5. Fahrzeug (1) nach Anspruch 4, wobei die Trägerstruktur (10) mindestens zwei Pfosten (11) umfasst, die in im Wesentlichen vertikaler Position im Inneren des Fahrzeugs (1) in einem Abstand voneinander installiert sind.

6. Fahrzeug (1) nach Anspruch 5 in Verbindung mit Anspruch 3, wobei die mindestens eine verstellbare Fläche (20) eine einzelne verstellbare Fläche umfasst, die eine Vielzahl von nebeneinander liegenden Sitzplätzen (21) bildet und an ihren Enden verstellbar mit den zwei Pfosten (11) verbunden ist, und wobei die Betätigungseinrichtungen (30) einen einzelnen Linearmotor umfassen, der an einem der zwei Pfosten (11) montiert ist, oder zwei Motoren, die jeweils an einem entsprechenden Pfosten (11) montiert sind.

7. Fahrzeug (1) nach Anspruch 5 in Verbindung mit Anspruch 3, wobei die mindestens eine verstellbare Fläche (20) mindestens zwei separate verstellbare Flächen aufweist, die jeweils verstellbar verbunden sind mit einem entsprechenden Pfosten (11) verbunden sind, wobei jede verstellbare Fläche mindestens einen Sitzplatz (21) bildet, und wobei die Betätigungseinrichtungen (30) für jede verstellbare Fläche (20) einen Linearmotor umfassen, der gleitend an dem entsprechenden Pfosten (11) montiert ist.

8. Raummanagementsystem im Inneren eines Fahrzeugs (1) nach einem der vorherigen Ansprüche, umfassend mindestens einen Schritt, der darin besteht, die Anzahl der verfügbaren Sitzplätze abhängig von dem Aufkommen der zu befördernden Fahrgäste zu ändern.

## Claims

1. A passenger transport vehicle (1), comprising a space management system within the vehicle which is configured to vary the number of available seats depending on the level of passenger traffic to be carried, wherein the management system comprises a support structure (10) which is fixedly installed within the vehicle (1), and at least one movable surface (20) which is movably connected to the support structure (10) between a first position in which the movable surface (20) forms at least one seat (21) available to passengers and a second position in which the movable surface (20) is moved into a position inaccessible to passengers, **characterised in that** the support structure (10) comprises at least one post (11) which is installed in a substantially vertical position inside the vehicle (1), and the at least one movable surface (20) is slidably connected to the post (11) of the support structure (10) between the first position where the movable surface (20) is positioned close to and at a predetermined distance from the floor (5) of the vehicle (1) and the second position where the movable surface (20) is positioned close to or against the ceiling of the vehicle (1).

2. The vehicle (1) according to claim 1, wherein the management system comprises at least one control device (2) installed on board the vehicle (1) and configured to provide at least one remote control signal (S_{c}) for activating, preferably in real time, the variation of the number of seats available for passengers.

3. The vehicle (1) according to claim 2, wherein the management system comprises actuation means (30) which are configured to move the at least one movable surface (20) between the first position and the second position depending on a control signal (S_{c}) emitted remotely by the control device (2).

4. The vehicle (1) according to claim 3, wherein the actuation means (30) comprise a linear motor slidably mounted on at least one post (11) of the support structure (10), being substantially integral with the at least one movable surface (20).

5. The vehicle (1) according to claim 4, wherein the support structure (10) comprises at least two posts (11) which are installed in a substantially vertical position inside the vehicle (1) at a distance from each other.

6. The vehicle (1) according to claim 5 taken in combination with claim 3, wherein the at least one movable surface (20) comprises a single movable surface which forms a plurality of side-by-side seats (21) and is slidably connected at its ends to the two posts (11), and wherein the actuation means (30) comprise a single linear motor mounted on one of the two posts (11), or two motors each mounted on a corresponding post (11).

7. The vehicle (1) according to claim 5 taken in combination with claim 3, wherein the at least one movable surface (20) comprises at least two separate movable surfaces which are each slidably connected to a corresponding post (11), each movable surface forming at least one seat (21), and wherein the actuation means (30) comprises, for each movable surface (20) linear motor slidably mounted on the corresponding post (11).

8. A method for managing the space inside a vehicle (1) according to any one of the preceding claims, comprising at least one step consisting of modifying the number of available seats as a function of the level of passenger traffic to be transported.
